# EUROPEAN PATENT APPLICATION

(11) **EP 1 314 548 A1**
(43) Date of publication of application: **28.05.2003**
(21) Application number: 01958582.7
(22) Date of filing: 28.08.2001
(51) Int. Cl.: B32B 5/28, C08J 5/04, B29B 11/16

(54) **COMPOSITE MATERIAL, FORMED PRODUCT, AND PREPREG**

(30) Priority: 28.08.2000 JP 2000256740
(71) Applicant: Sakase Adtech Co., Ltd., Fukui 910-0363 (JP)
(72) Inventor: KUBOMURA, Kenji, Kanazawa-shi, Ishikawa 921-8163 (JP); WATANABE, Akihito, Maruoka-cho Sakai-gun Fukui 910-0363 (JP)
(74) Representative: Kilian, Helmut, Dr.
(86) International application number: JP0107393
(87) International publication number: WO02018127

(57) **Abstract**

A prepreg, including a laminated body impregnated with resin having two triaxial woven fabrics prepregs(101) and an electrically conductive non-woven fabric (102) are laminated each other, wherein an antenna reflector is formed by laying up the prepreg, and the non-woven fabric may be a heat conducting non-woven fabric, heat insulating non-woven fabric, electrical conducting non-woven fabric, electrical insulating non-woven fabric, heat conducting and electrical conducting non-woven fabric, heat conducting and electrical insulating non-woven fabric, heat insulating and electrical conducting non-woven fabric, heat insulating and electrical insulating non-woven fabric.

## Description

### Technical Field

The invention relates to a composite material that uses a triaxial woven fabric including, for instance, a prepreg in which a resin is not completely cured, and a molded body made of the composite material, in particular, to a composite material that is light in weight, large in the mechanical strength and endowed with the electrical conducting properties, the electrical insulating properties, the heat conducting properties and the heat insulating properties, a molded body and prepreg.

### Background Art

In composite materials that are used in existing structured bodies, reinforcement fibers are impregnated with a resin. In the following, such composite materials are referred to as "fiber-reinforced resin composite materials".

In the fiber-reinforced resin composite material, combinations of reinforcement fibers and resins to be a matrix can be properly selected.

Accordingly, the fiber-reinforced resin composite materials can be endowed with the physical and chemical properties that are appropriate for service conditions thereof.

As a result, the fiber-reinforced resin composite materials are used in many application fields.

Furthermore, the fiber-reinforced resin composite materials are high in the specific strength and excellent in the corrosion resistance. Accordingly, the fiber-reinforced resin composite materials are suitable for structured bodies that are light in the weight and subjected to large stress, resulting in finding applications in many fields.

As a molded body that uses the fiber-reinforced resin composite material, there is an antenna's structural material for use with an artificial satellite.

For instance, JP-A-11-168321 discloses a planar antenna device.

In the planar antenna device, metal radiation elements are arranged on a thin film (first film) of KFRP (Kevlar (Trade mark) fiber-reinforced plastic).

The above Kevlar belongs to aramid fiber.

In front of the first film, a KFRP film (second film) is similarly disposed so as to face the first film.

The second film is provided with a ground conductor metal film such as a metal film and so on.

The first film is used as a radiation element sheet and the second film is used as a ground conductor sheet.

The first film and the second film are expanded into planes by use of an expansion mechanism.

The expanded first film and second film constitute a planar antenna.

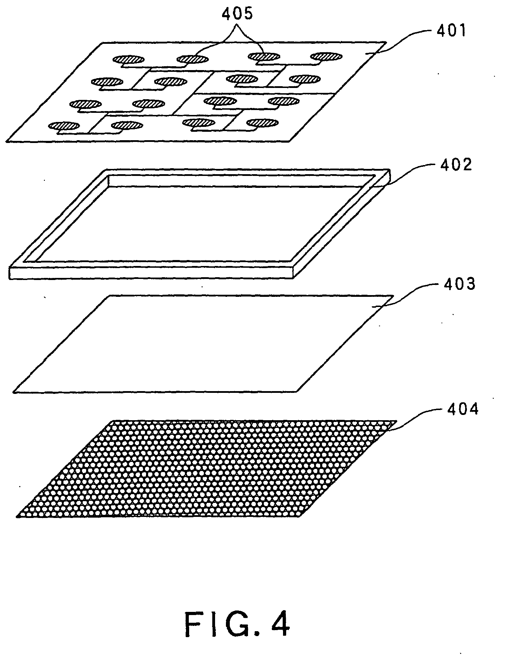

An existing planar antenna configuration will be explained with reference to Fig. 4. Fig. 4 is a schematic diagram of an existing planar antenna.

The configuration of the existing planar antenna, as shown in Fig. 4, is provided on a KFRP film 401 with circular patches 405 to be metal elements.

Furthermore, in a ground conductor film 404 of the existing planar antenna, a metal film or fibers made of a metal such as copper are formed tissue-like as if straining paper.

In the existing planar antenna configuration, the KFRP film 403 is provided with the ground conductor film 404.

Furthermore, the KFRP films 401 and 403 are adhered and fixed to a frame-like dielectric material (frame-like member) 402 made of CFRP (carbon fiber-reinforced plastic) and expanded into planes by use of an expansion mechanism.

Thus, the existing planar antenna, by supporting the metal elements and the ground conductor layer with the expansion mechanism such as the CFRP frame member and so on and the films such as the KFRP, accomplishes lighter weight.

However, in a reflector (antenna reflector) of the antenna, different from the planar antenna, a conductive layer has to be expanded with a definite shape.

Furthermore, depending on the application circumstances, the antenna reflector itself is demanded to have sufficient mechanical strength.

Still furthermore, depending on the application circumstances, the antenna reflector is demanded to have spring-back properties with which the antenna reflector can restore its original state even after temporarily deformed owing to load stress and so on.

Accordingly, in the application to the antenna reflector and so on, a structure in which metal fiber tissue is provided to the KFRP film, being deficient in the self-sustaining properties because of being film-like or sheet-like, cannot function.

Accordingly, in the antenna, the fiber-reinforced resin composite material is molded into a three-dimensional curve such as a paraboloid, and thereby the reflector is constituted.

However, the antenna, in order to form an electromagnetic wave reflection surface, has to be endowed with the electrical conducting properties.

Accordingly, in the existing antennas, such structures as that in the triaxial woven fabric itself, as the reinforcement fiber of the composite material that constitutes the three-dimensional curved surface, conductive carbon fiber is used, or plating is applied on a surface of the molded body made of the composite materials, or a metal foil is laminated are adopted.

However, when the carbon fiber is used in the triaxial woven fabric as the reinforcement fiber of the composite material, the carbon fiber that is high in the electric conductivity, being high in the elastic modulus, is difficult to weave and mold, resulting in pushing up the manufacturing cost.

Furthermore, when the carbon fiber is used in the triaxial woven fabric as the reinforcement fiber of the composite material, the carbon fiber that is high in the electric-conductivity, being at most 1.9 x 10⁻⁴ Ω·cm in the volume resistivity, is not sufficient in enhancing the electromagnetic wave reflectance or in coping with higher frequencies.

Still furthermore, the antenna has a very large dimension and shape in a molded state. Accordingly, also when a surface of the composite material that is shaped into the antenna is plated, irrespective of wet or dry process, there is restriction on a magnitude of a processing bath or chamber, and the adhesion of the plating can be uniformly applied with difficulty.

Furthermore, when the plating is carried out according to a wet process, a plating liquid unfavorably erodes the composite material or is absorbed by the composite material.

Still furthermore, when the metal foil is stuck onto a surface of the molded composite material, since, in an artificial satellite antenna reflector or the like that is finished very light in the weight, a molded body is very thin, even owing to only a slight stress generated on a surface thereof, warp is caused and deformation results, or when adhesive force is suppressed to inhibit the deformation from occurring, the metal foil peels off.

Furthermore, when an artificial satellite is launched, a very high-energy acoustic vibration due to a boost gas that accompanies a shock wave of a rocket is transmitted even to the inside of a fairing where the antenna is housed.

Accordingly, in the artificial satellite antenna, the surface of the metal foil is in some cases broken. When in order to inhibit the metal foil surface from breaking, a thickness of the metal foil is larger, the heavy weight results .

In addition, the metal foil originally has a two-dimensional plane and, when being stuck to a three-dimensionally curved surface of the antenna, has no conformability to the curved surface. Accordingly, it is difficult to form a three-dimensional antenna with a single metal foil.

Furthermore, when metal foils that are divided and cut in conformity with a three-dimensional shape are stuck together and thereby a three-dimensionally curved surface is formed, since an adhesive remains between stuck surfaces, the metal foils cannot be stuck with the electric conductivity maintaining.

In order to cope with such problems, although it has been tried to constitute the antenna with a non-woven fabric made of metal fibers, non-woven metal fabric alone, being low in both the mechanical strength and the elastic modulus, cannot work as a structural material in this application.

On the other hand, in a molded body that is used in, for instance, space, other than the electrical conducting properties, for instance in the case of an antenna, the heat conducting properties in a thickness direction, the electrical insulating properties, and the heat insulating properties are also demanded. However, it is difficult for the existing material to give these characteristics.

The invention is carried out in view of the above problems and intends to provide a composite material that has the mechanical strength, the elastic modulus and high specific strength that are similar to that of the fiber-reinforced resin composite material, and at least any one of the electrical conducting properties comparable to metal materials, the electrical insulating properties, the heat conducting properties and the heat insulating properties, a molded body and a prepreg.

### Disclosure of the Invention

In a composite material according to the invention, at least one or more triaxial woven fabrics and at least one or more non-woven fabrics are laminated, thereby a laminated body is formed, and the laminated body is impregnated with a resin.

Furthermore, in a composite material according to the invention, at least one or more triaxial woven fabrics impregnated with a resin and at least one or more non-woven fabrics impregnated with a resin are laminated.

Still furthermore, in a composite material according to the invention, at least one or more triaxial woven fabrics impregnated with a resin and at least one or more non-woven fabrics are laminated.

Furthermore, in a composite material according to the invention, the triaxial woven fabrics and the non-woven fabrics are alternately laminated.

Still furthermore, in a composite material according to the invention, the resin is in a not completely cured state.

Furthermore, in a composite material according to the invention, the non-wove fabric has the electrical conducting properties.

Still furthermore, in a composite material according to the invention, the non-woven fabric has the electrical insulating properties.

Furthermore, in a composite material according to the invention, the non-woven fabric has the heat conducting properties.

Still furthermore, in a composite material according to the invention, the non-woven fabric has the heat insulating properties.

Furthermore, in a molded body according to the invention, at least one or more triaxial woven fabrics and one or more non-woven fabrics are laminated, thereby a laminated body is formed, the laminated body is impregnated with a resin, thereby a composite material is formed, the composite material is laid-up in a mold in a state where the resin is not completely cured followed by curing the resin of the laid-up composite material, and thereby a molded body is formed.

Still furthermore, in a molded body according to the invention, at least one or more triaxial woven fabrics impregnated with a resin and at least one or more non-woven fabrics impregnated with a resin are mutually laminated in a state where the resins are not completely cured and thereby a composite material is formed, the composite material is laid up in a mold followed by curing the resin in the laid-up composite material, and thereby a molded body is formed.

Furthermore, in a molded body according to the invention, at least one or more triaxial woven fabrics impregnated with a resin and at least one or more non-woven fabrics are laminated in a state where the resin of the triaxial woven fabric is not completely cured and thereby a composite material is formed, the composite material is laid up in a mold followed by curing the resin in the laid-up composite material, and thereby a molded body is formed.

Still furthermore, in a molded body according to the invention, at least one or more triaxial woven fabrics and at least one or more non-woven fabrics are laminated to form a laminated body, the laminated body is laid up in a mold with the laminated body impregnating with a resin followed by curing the resin in the laid-up laminated body, and thereby a molded body is formed.

Furthermore, in a molded body according to the invention, a triaxial woven fabric impregnated with a resin and a non-woven fabric are laminated and thereby a laminated body is formed, the laminated body is laid up followed by curing the resin, and thereby a molded body is formed.

Still furthermore, in a molded body according to the invention, the non-wove fabric has the electrical conducting properties.

Furthermore, in a molded body according to the invention, the non-woven fabric has the electrical insulating properties.

Still furthermore, in a molded body according to the invention, the non-woven fabric has the heat conducting properties.

Furthermore, in a molded body according to the invention, the non-woven fabric has the heat insulating properties.

Still furthermore, in a prepreg according to the invention, triaxial woven fabrics of reinforcement fiber and conductive non-woven fabrics are alternately or in an arbitrary order laminated followed by impregnating with a resin, and thereby a prepreg is formed.

Furthermore, in a prepreg according to the invention, prepregs formed by impregnating triaxial woven fabrics of reinforcement fiber with a resin and prepregs formed by impregnating conductive non-woven fabrics with a resin are alternately or in an arbitrary order laminated, and thereby a prepreg is formed.

Furthermore, in a composite material according to the invention, the above prepregs are mutually laminated or the above prepreg is laminated with a prepreg having another structure.

Still furthermore, in a composite material according to the invention, triaxial woven fabrics made of reinforcement fiber and conductive non-woven fabrics are alternately or in an arbitrary order laminated followed by impregnating with a resin and further followed by curing, and thereby the composite material is formed.

Here, a prepreg in the specification is one kind of composite materials and is one (intermediate base material) in which a fiber base material such as a triaxial woven fabric, a unidirectional material and a biaxial fabric is impregnated with a resin and the resin is maintained in a semi-cured state (a state that is not completely cured).

Furthermore, in the specification, as methods and conditions of curing the prepreg, as one example, the following methods and conditions can be used.

The composite material prior to the curing according to one example of the following methods and conditions is a prepreg.

### (Method)

1. Compression molding, 2. Vacuum bag molding, 3. Autoclavemolding, 4. Fiber placement molding, 5. Sheet winding molding, 6. Rolling table molding and so on.

### (Conditions)

Curing temperature: 120 to 180 degree centigrade.
Curing time period: 1 to 3 hours.
Molding pressure: atmospheric pressure to 0.6 MPa.

Furthermore, "lay-up" means an operation by which the fiber base material or prepreg (is cut, stuck and laminated) is given a shape on a mold.

Still furthermore, a non-woven fabric is one in which short fibers are entangled and formed into a sheet. Paper, felt and absorbent cotton can be said as one of the non-woven fabrics.

As the characteristics of the non-woven fabric, it can be cited that the non-woven fabric is physically pseudo-isotropic.

That is, since the non-woven fabric can well conform to a three-dimensionally curved surface and a shape having a sharp angle portion, wrinkle is caused with difficulty. Furthermore, the non-woven fabric, in the case of being laminated with the other material, can be peeled with difficulty. This is evident in the thermal shock test and the peel test.

Furthermore, the non-woven fabric, after folding, leaves a fold line with difficulty, and after expansion, its function does not disappear.

Still furthermore, the non-woven fabric, having voids in comparison with the metal foil or the like, is low in the density, resulting in lighter weight.

Furthermore, the non-woven fabric, having voids, can withstand sound or vibration at the launch of a rocket, resulting in neither breaking nor peeling.

Still furthermore, the electrical conducting properties and the heat conducting properties of the non-woven fabric, in the case of the metal fibers being used or the metal plating being applied, reflect the characteristics of the metal.

Thus, when the electrical conducting and heat conducting non-woven fabric is used in the composite material, the invention exhibits the following effects.

So far, carbon fiber composite materials, being high in the elastic modulus, light in the weight, very small in the thermal expansion coefficient, and high in the heat conducting properties in a fiber length direction, have been used in almost all members of an artificial satellite.

However, because the heat conducting properties in a direction perpendicular to a fiber axis of the carbon fiber are low and the heat conducting properties of the matrix resin are very low, the heat conducting properties in a thickness direction of the carbon fiber composite material are low. Accordingly, the capacity of releasing heat in a thickness direction is very low.

Here, a matrix resin means a resin for use in the matrix, that is, a resin that becomes a matrix(base material).

Also in the reinforcement fiber, a resin called a sizing agent is used. Accordingly, an ordinary resin and the matrix resin are called differently. However, in general, a resin of the composite material is a resin for use in the matrix.

The composite materials such as the fiber-reinforced plastics (FRP) and polymer matrix composites (PMC), largely divided, are made of three constituents.
- a reinforcement fiber.
- a matrix(base material): a resin in the case of the PMC.
- an interface between the reinforcement fiber and the matrix.

In the case of the PMC, the matrix is a resin (polymer) , in the case of MMC (metal matrix composite), the matrix is a metal, and in the case of CMC (ceramic matrix composite), the matrix(base material) is ceramics.

When high heat dissipation from a thickness direction can be obtained in the carbon fiber-reinforced composite material, a heat dissipation structure of the artificial satellite can be dispensed with or may be simplified.

That is, as in the invention, when the electrical conducting and heat conducting non-woven fabric is used as the non-woven fabric, the invention can contribute to the artificial satellite in an improvement in the performance, reduction in the weight and reduction in the cost.

In the invention where the electrically insulating and heat conducting non-woven fabric is used in the composite material, the composite material can be used like a printed substrate (one in which a front surface and a rear surface are fundamentally insulated).

Such composite material exhibits heat dissipation effect in a mounted electronic device and an onboard device that requires insulation.

Furthermore, in a composite material according to the invention, by laminating the non-woven fabric to the triaxial woven fabric, proper heat conducting properties (heat dissipation properties) and heat insulating properties can be given to necessary portions.

Accordingly, when the composite material according to the invention is used in, for instance, a bus (body structure) of an artificial satellite and a solar battery paddle thereof, to portions where the heat control is necessary of these, necessary heat control can be easily given by use of the existing method.

### Brief Description of the Drawings

Fig. 1 is a schematic diagram showing one embodiment of a composite material according to the invention,
Fig. 2 is a partial enlargement diagram of a triaxial woven fabric used in one embodiment of the composite material according to the invention,
Fig. 3 is a schematic diagram of an antenna reflector as a molded body according to the invention, and
Fig. 4 is a schematic diagram of an existing planar antenna structure.

### Best Mode for Carrying Out the Invention

In order to give more detailed explanation of the invention, the invention will be explained in accordance with the attached drawings. The explanation of an embodiment of the composite material according to the invention can be also applied to that of a prepreg according to the invention.

That is, in composite materials according to the invention, one in which a resin of the composite material is not completely cured is a prepreg.

### (Explanation of one embodiment of composite material)

One embodiment of the composite material according to the invention has a structure called a symmetrically laminated structure that includes the non-woven fabric that is laminated in an order of, for instance, triaxial woven fabric/non-woven fabric/triaxial woven fabric, or non-woven fabric/triaxial woven fabric/non-woven fabric.

Furthermore, when a plurality of the triaxial woven fabrics is laminated, between arbitrary layers the non-woven fabric may be interposed.

That is, in one embodiment of the composite material according to the invention, the triaxial woven fabrics and the non-woven fabrics may be arbitrarily laminated.

Here, the lamination means, irrespective of the kinds of the layers, to stack two or more layers. In the invention, the non-woven fabric layer is stacked onto the triaxial woven fabric layer.

Furthermore, the non-woven fabric interposed between the triaxial woven fabrics may not be sheet-like, that is, at least one or more non-woven fabrics having an arbitrary shape such as a circular, polygonal or elliptical shape may be interposed between the triaxial woven fabrics.

Owing to such structure of the composite material, thermal strain can be minimized, and furthermore when the non-woven fabric is interposed between appropriate layers made of the triaxial woven fabrics, higher density strength can be obtained.

Furthermore, in one embodiment of the composite material according to the invention, the triaxial woven fabrics of the reinforcement fiber and the non-woven fabrics are laminated alternately or in an arbitrary order followed by impregnating with a resin.

In the composite material impregnated with a resin, when the resin is not completely cured, it is a prepreg.

Furthermore, in one embodiment of a composite material according to the invention, prepregs in which the triaxial woven fabric is impregnated with a resin and prepregs in which the non-woven fabric is impregnated with a resin may be alternately or in an arbitrary order laminated.

When the composite materials are kept in the prepreg state, by appropriately selecting combinations thereof, composite materials having necessary structures/characteristics can be formed.

Furthermore, in one embodiment of a composite material according to the invention, a composite material having an arbitrary shape may be formed by mutually laminating the prepregs, or, as needs arise, by further laminating thereon a prepreg having other structure, followed by curing.

Still furthermore, in one embodiment of a composite material according to the invention, the triaxial woven fabrics of reinforcement fiber and the non-woven fabrics are alternately or in an arbitrary order laminated, impregnated with a resin, cured, and thereby the composite material can be obtained.

Here, as a method in which the triaxial woven fabric and the non-woven fabric are laminated to obtain a composite material, and therefrom a molded body is obtained, the following variations can be considered. It goes without saying that the invention is not restricted to the following variations and even other methods can be used.
1. At least one or more triaxial woven fabrics and at least one or more non-woven fabrics are laminated followed by impregnating with a resin, and thereby forming a prepreg. The prepreg is laid-up in a mold followed by curing, and thereby a molded body is obtained.
2. A prepreg in which at least one or more triaxial woven fabrics are impregnated with a resin and a prepreg in which at least one or more non-woven fabrics are impregnated with a resin are laminated. The obtained prepreg is laid-up in a mold followed by curing, and thereby a molded body is obtained.
3. A prepreg in which at least one or more triaxial woven fabrics are impregnated with a resin and at least one or more non-woven fabrics (not impregnated with a resin) are laminated. The obtained prepreg is laid-up in a mold followed by curing, and thereby a molded body is obtained.
4. At least one or more triaxial woven fabrics and at least one or more non-woven fabrics are laminated, laid-up in a mold while impregnating with a resin followed by curing, and thereby a molded body is obtained.
5. At least one or more triaxial woven fabrics are impregnated with a resin, at least one or more non-woven fabrics are laminated thereon followed by laying-up in a mold further followed by curing, and thereby a molded body is obtained.

Furthermore, the lamination in a method in which the triaxial woven fabric and the non-woven fabric are laminated and thereby a composite material is obtained contains not only a case where at least one or more triaxial woven fabrics and at least one or more non-woven fabrics are arbitrarily laminated but also a case where both are alternately laminated.

Here, as the method of impregnating with a resin, the following methods can be cited.
1. A resin film is transcribed on a fiber base material followed by compressing and heating to impregnate, and thereby a semi-cured prepreg is obtained (it is called a dry (hot-melt) method).
2. A fiber base material is impregnated with a resin liquid followed by compressing and heating, and thereby a semi-cured prepreg is obtained (it is called a wet (impregnating) method).

Furthermore, when a molded body according to the invention is generated, a prepreg (semi-cured intermediate base material) process may be omitted.

That is, according to hand lay-up molding in which the fiber base material and the non-woven fabric are directly impregnated with a resin liquid in a mold followed by curing, or autoclave molding in which a resin film is directly transcribed onto a fiber base material and laying-up and molding in an autoclave as it is further followed by curing, a molded body can be obtained.

Furthermore, there is a method called an RTM molding in which the fiber base material and the non-woven fabric are set in a mold (it is called a preform) followed by injecting a resin liquid and curing, and thereby a molded body is obtained.

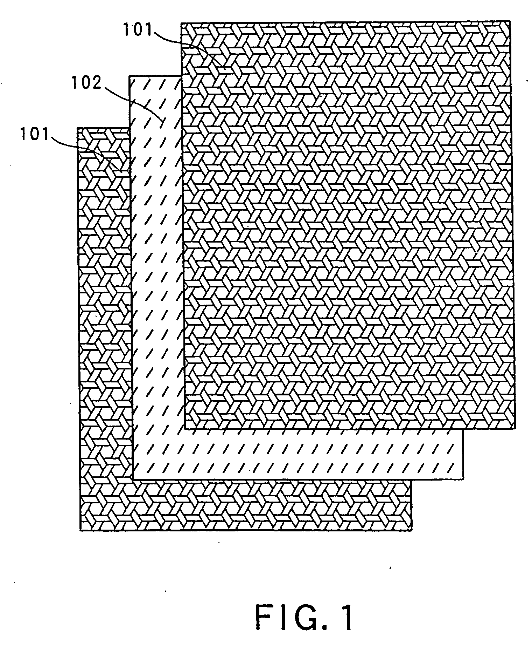

Here, as one embodiment of a composite material according to the invention, an example of a laminate structure of the triaxial woven fabric and the non-woven fabric is shown in Fig. 1. Fig. 1 is a schematic diagram of one embodiment of the composite material according to the invention.

In the composite material shown in Fig. 1, as the non-woven fabric a conductive non-woven fabric is used. The composite material shown in Fig. 1 has a sandwich-like structure in which a conductive non-woven fabric 102 is interposed between two triaxial woven fabric prepregs 101.

The triaxial woven fabric prepreg 101 is one in which the triaxial woven fabric of reinforcement fiber is impregnated with a resin. Furthermore, the resin with which the triaxial woven fabric prepreg 101 is impregnated is not completely cured.

The laminated bodies may be impregnated with a matrix resin followed by molding into a target shape further followed by curing.

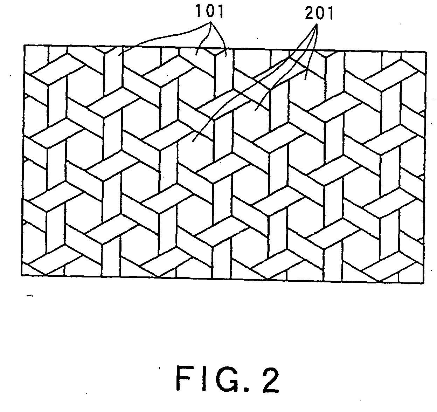

Furthermore, in a weave structure of the triaxial woven fabric, there are formed hexagonal through holes 201 that interconnect a front and rear surfaces as shown in Fig. 2.

Accordingly, by controlling a magnitude of the through holes 201 according to a weaving method of the triaxial woven fabric, electrical conduction can be established between the conductive non-woven fabrics disposed on the front and rear surfaces of the interposed triaxial woven fabric. Fig. 2 is a partially enlarged diagram of the triaxial woven fabric used in one embodiment of the composite material according to the invention.

In a structure of the composite material such as shown in Fig. 1, by laminating an appropriate number of the triaxial woven fabric prepregs 101 made of reinforcement fiber and the non-woven fabrics 102, both the mechanical characteristics and the electrical characteristics can be controlled and improved.

Furthermore, for instance, since there are the through holes 201 of the triaxial woven fabricprepreg 101, for instance, when the electrical conducting non-woven fabric is used as the non-woven fabric, the composite material can be provided with the electrical conducting properties in a thickness direction thereof.

Here, the thickness direction means a direction substantially vertical to a sheet surface of the triaxial woven fabric prepreg 101 shown in, for instance, Fig. 1.

Accordingly, in the case of a molded body that uses the composite material shown in, for instance, Fig. 1, excellent electrical conducting properties can be established even in a thickness direction thereof.

Furthermore, for instance, since there are through holes 201 of the triaxial woven fabric prepreg 101, for instance, when the heat conducting non-woven fabric is used as the non-woven fabric, the composite material can be provided with the heat conducting properties in a thickness direction thereof.

Accordingly, in the case of a molded body such an antenna that uses the composite material shown in, for instance, Fig. 1, also in a thickness direction thereof, excellent heat conducting properties can be established.

Furthermore, when an electrically insulating non-woven fabric is used as the non-woven fabric, when the triaxial woven fabric prepreg 101 is also provided with the electrically insulating properties, the composite material shown in Fig. 1 itself can be insulated. Accordingly, when devices or circuits are designed on the composite material, the designing can be easily performed.

Still furthermore, when a heat insulating non-woven fabric is used, according to a simple way, the composite material can be endowed with the heat insulating properties. Furthermore, in applications such as an antenna reflector, on a surface side of the composite material made of the triaxial woven fabric, when a conductive non-woven fabric is stuck followed by laminating, and thereby preferable electrical characteristics can be endowed.

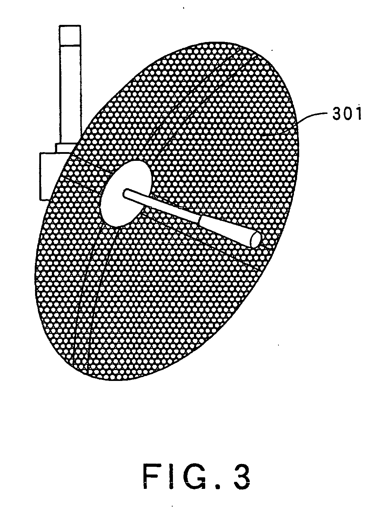

Now, with reference to Fig. 3, a molded body (antenna reflector) generated by use of one embodiment of the composite material according to the invention will be explained. Fig. 3 is a schematic diagram of an antenna reflector as a molded body according to the invention.

In the antenna reflector 301, an electrical conducting non-woven fabric is stuck onto a front surface side of the composite material made of the triaxial woven fabric followed by laminating, and thereby the antenna reflector 301 is endowed with preferable electrical characteristics.

In the triaxial woven fabric, owing to restrictions on manufacture, there is a lower limit in making smaller an opening.

The electric wave reflectance depends largely on a magnitude of the opening, as the frequency becomes higher, unless the opening is made smaller, the more the electric wave goes through, resulting in lowering the electric wave reflectance.

In order to cope with higher frequencies exceeding a limit to the electric wave reflection due to the triaxial woven fabric alone, a conductive non-woven fabric having functionality higher in the electric wave reflectance is laminated.

The non-woven fabric (functional non-woven fabric), without damaging the characteristics of the triaxial woven fabric, enables to enhance (or give) the functionality such as the electrical, thermal performances.

Processes until a molded body is obtained from the fiber base material such as the triaxial woven fabric will be generally explained. As the method by which a molded body is obtained from the composite material according to the embodiment, there are, for instance, the following three methods.

### (Autoclave molding, vacuum bag molding)

1. Fiber base material → prepreg (impregnation · semi-curing) → lay-up (giving a form on a mold) → molding (curing) → molded body.

### (RTM molding)

2. Fiber base material → preform (setting in a mold) → molding (resin injection · curing) → molded body.

### (Hand lay-up molding)

3. Fiber base material → lay-up (giving a form on a mold with a resin impregnating · curing) → molded body.

### [Characteristics of composite material]

In one embodiment of a composite material according to the invention, the electrical characteristics such as the electrical conducting properties, the electrical insulating properties, the heat conducting properties, the heat insulating properties and the electric wave reflecting properties are controlled with the non-woven fabric.

That is, the electrical conducting properties, the electrical insulating properties, the heat conducting properties, the heat insulating properties and the electric wave reflecting properties can be controlled with the kind of the fiber given to the non-woven fabric, a filament diameter of the fiber, and density (it is controlled by varying voids and a thickness).

For instance, the heat conducting properties of one embodiment of the composite material according to the invention can be controlled with a material that is used in the non-woven fabric. However, the electrical conducting non-woven fabrics high in the electrical conducting properties are in many cases the heat conducting non-woven fabrics high in the heat conducting properties.

That is, the non-woven fabric that is used in the composite material according to the embodiment can be considered a heat conducting non-woven fabric, a heat insulating non-woven fabric, an electrical conducting non-woven fabric, an electrical insulating non-woven fabric, a heat conducting and electrical conducting non-woven fabric, a heat conducting and electrical insulating non-woven fabric, a heat insulating and electrical conducting non-woven fabric, and a heat insulating and electrical insulating non-woven fabric.

According to the characteristics of these non-woven fabrics, the characteristics of one embodiment of the composite material according to the invention are determined.

Furthermore, to the acoustic vibration when a rocket is launched, these non-woven fabrics, having voids therein similarly to the triaxial woven fabrics, are light and can stand up to stronger acoustic vibrations.

Still furthermore, as the structure and shape of the non-woven fabric, for instance, in the electrical conducting non-woven fabric, the non-woven fabric made of metal fiber or metallized fiber, or the metallized non-woven fabric obtained by depositing a metal on the non-woven fabric can take a three-dimensionally free shape.

Accordingly, the non-woven fabric and the triaxial woven fabric are laminated and, without completely curing the resin, a prepreg can be formed.

Furthermore, the non-woven fabric and the triaxial woven fabric can be laminated to form a composite material.

Still furthermore, to a composite material made of a resin and the triaxial woven fabric, a non-woven fabric can be stuck.

When a composite material that is formed into a lamination structure by interposing the non-woven fabric between the triaxial woven fabrics is molded, one that does not warp and peel, can be superposed and pasted, and can be formed into three-dimensional curved surfaces can be obtained. Accordingly, disadvantages in the molding properties in the metal foils can be overcome.

Furthermore, since the composite material simultaneously works as a supporter of the non-woven fabric and a structural material, large mechanical strength and elastic modulus can be maintained.

A structure in which the triaxial woven fabrics and the non-woven fabric are thus molded into one body is large in the spring-back properties by which, even after temporarily bent and deformed owing to application of load stress, when the stress is removed, the structure restores its original shape.

The characteristics are very preferable in the antenna reflector boarded on an artificial satellite and so on.

In addition, even when the prepreg of the triaxial woven fabric impregnated with the resin is made extremely thinner to an extent of a substantial film, its shape can be maintained in space without the atmosphere. Accordingly, appreciably lighter weights can be achieved.

### (Embodiments)

In the following, a specific structure of a molded body in which a composite material according to the invention is employed will be explained as embodiments. Here, a parabolic antenna reflector is adopted as a molded body according to the invention. In addition, as the non-woven fabric an electrical conducting non-woven fabric is used.

### Embodiment 1

A sintered non-woven fabric in which copper fibers having a filament diameter of 16 µm are used and that has the porosity of 53.3% is pasted on a surface of a triaxial woven fabric prepreg that is obtained by weaving 135tex glass fibers according to a Basic weave with the weave density of 9.25 threads/inch and by impregnating with epoxy resin. With this configuration, a reflector for use with a 350 mm diameter parabolic antenna for use in 12 GHz frequency band is experimentally prepared.

When a BS airwave of 11.84256 GHz is actually measured through an amplifier with a spectrum analyzer, the receiving intensity is -53.17 dB.

It is found that the reflector has such a light weight as 31 g, different from a metal reflector, does not structurally exhibit the plastic deformation due to an external load, has the spring-back function and is excellent in the shape-sustaining properties.

In the 180-degree peel test, material destruction of the copper fiber sintered non-woven fabric does not accompany the peeling.

In the thermal shock test from +180 degree centigrade in an oven to -195 degree centigrade in liquid nitrogen, the copper fiber sintered non-woven fabric does not peel off the triaxial woven fabric composite material.

### Embodiment 2

A sintered non-woven fabric in which stainless steel fibers having a single fiber diameter of 8 µm are used and that has the porosity of 18.2% is interposed between triaxial woven fabric prepregs that are obtained by weaving 11tex PBO fibers according to a Basic weave with the weave density of 18.5 threads/inch and by impregnating with cyanate ester resin. With this configuration, a reflector for use with a 350 mm diameter parabolic antenna for use in 12 GHz frequency band is experimentally prepared.

When a BS airwave of 11.84256 GHz is actually measured through an amplifier with a spectrum analyzer, the receiving intensity is -53.57 dB.

It is found that the reflector has such a light weight as 18 g, different from a metal reflector, does not structurally exhibit the plastic deformation due to an external load, has the spring-back function and is excellent in the shape-sustaining properties.

In the 180-degree peel test, material destruction of the stainless steel fiber sintered non-woven fabric does not accompany the peeling.

In the thermal shock test from +180 degree centigrade in an oven to -195 degree centigrade in liquid nitrogen, the stainless steel fiber sintered non-woven fabric does not peel off the triaxial woven fabric composite material.

### Comparative embodiment 1

With 1 mm thick aluminum, a reflector for use with a 360 mm diameter parabolic antenna for use in 12 GHz frequency band is experimentally prepared.

When a BS airwave of 11.84256 GHz is actually measured through an amplifier with a spectrum analyzer, the receiving intensity is -53.15 dB. It weighs 316 g.

### Comparative embodiment 2

A copper foil having a thickness of 30 µm is pasted on a surface of a triaxial woven fabric prepreg that is obtained by weaving 135tex glass fibers according to a Basic weave with the weave density of 9.25 threads/inch and by impregnating with epoxy resin. With this configuration, a reflector for use with a 350 mm diameter parabolic antenna for use in 12 GHz frequency band is experimentally prepared.

In a draping pattern in which the copper foil is divided into less than 12 divisions, the copper foils cannot fit well into a three-dimensional curved surface, resulting in a wrinkled reflector poor in a mirror surface accuracy.

It weighs 55 g, and after bending owing to own weight, it cannot spontaneously restore its original shape through the plastic deformation.

In the 180-degree peel test, the copper foil is peeled, and it is found that the peel strength is such low as 0.093 kN/m or less.

With a sample after the thermal shock test, the peel test is carried out. It is found that the peel strength is further deteriorated to 0.056 kN/m or less.

### Comparative embodiment 3

With a non-woven fabric simple body configuration in which a non-woven fabric that uses aramid fibers having a single fiber diameter of 12 µm and has the porosity of 17.3% is copper-plated by a thickness of 5 µm followed by impregnating with cyanate ester resin, a reflector for use with a 350 mm diameter parabolic antenna for use in 12 GHz frequency band is experimentally prepared.

Although since it is formed of the non-woven fabric simple body, it weighs only 5 g, it is low in the tearing strength and the stiffness, and deficient in the spring-back properties . It is found that maintaining dimensional precision is difficult.

In the above embodiments, as the electric conducting non-woven fabric, the non-woven fabric made of copper fibers and the non-woven fabric made of stainless steel fibers are used, and as the composite material containing the triaxial woven fabric, the glass fibers impregnated with epoxy resin and PBO impregnated with cyanate ester resin are used. However, the configurations of the composite materials according to the invention are not restricted to the above.

As materials constituting the electrical conducting non-woven fabric, metal fibers such as copper, silver, gold and stainless steel fiber sintered non-woven fabrics (in order to inhibit the performance from deteriorating owing to corrosion of the metal, gold or silver may be formed according to wet plating, vacuum-deposition or sputtering), or ones in which fibers made of appropriate materials such as aramid, PBO, glass, and carbon fiber are metal plated, or like a copper plated aramid fiber non-woven fabric ones in which the non-woven fabric made of aramid, PBO, glass or carbon fiber is metal plated may be used.

Thus, the material of the fiber is not questioned when the fiber has the electrical conducting properties and can be formed into the non-woven fabric.

Furthermore, as the non-woven fabric, copper plated aramid fiber non-woven fabric (weight: 38 g/m², plating thickness: 5 µm, porosity: 17%) can be used.

Such non-woven fabrics, in comparison with the non-woven fabrics 100% made of the metal fibers, are lighter in weight, higher in the mechanical strength, smaller in the thermal expansion coefficient, less in deterioration in the functionality after folding, easier in cutting, and can be finished into an excellent cross section.

Furthermore, such non-woven fabrics, being highly reflective even in a millimeter wave region, can be also applied to, other than the reflector and the ground conductor, elements such as patch and slot.

Furthermore, as the non-woven fabric, copper fiber sintered non-woven fabric (weight: 50 g/m², fiber diameter: 16 µm, porosity: 53%) can be used.

Such non-woven fabric, being 100% made of metal, is high in the heat resistance, free from care of out-gassing, flexible and small in the electrical resistance.

Furthermore, as the non-woven fabric, carbon fiber non-woven fabric (weight: 10 g/m², fiber diameter: 8 µm, porosity: 27%) can'be used.

Such non-woven fabric, being carbon fiber, is electrical conducting, and furthermore super-light in weight and small in the thermal expansion coefficient.

When such non-woven fabric is combined with the triaxial woven fabric in which the carbon fiber is used, with excellent properties of the triaxial woven fabric maintaining as it is, electric wave reflecting properties at higher frequencies can be obtained.

Furthermore, in the embodiments, as the materials that endow the molded body with the mechanical properties, an example of the triaxial woven fabric made of the glass and PBO fiber is cited.

The composite materials according to the embodiments are common to the fiber-reinforced resin composite materials in the mechanical properties such as the mechanical strength of the molded body, stiffness and the spring-back properties that enable to restore the original shape against the stress.

When the material of the molded body is properly selected, the molded body can be tailored to applications.

In particular, the composite material made of a triaxial woven fabric that uses continuous fibers is preferable.

In addition, when the molded body is formed into a triaxial woven fabric structure, owing to the structural symmetry thereof, the molded shape is deformed with difficulty against the temperature variation and load of mechanical stress. Furthermore, since when these loads are removed, the original design shape can be restored, the shape stability is excellent.

As the fibers that can be used with the triaxial woven fabrics, aramid, PBO, glass, and carbon fiber can be cited. As the structure thereof, a 16 to 64 gage basic weave or bi-plain weave pattern triaxial woven fabric structure can be adopted.

Furthermore, as the fibers that are used in the triaxial woven fabrics, 64 gage basic weave pattern triaxial woven fabric in which PBO fibers having the fineness of 11 tex (weight: 26 g/m², weave density: 18.5 threads/in) can be also used.

The triaxial woven fabric, being made of the PBO fiber, is high in the mechanical strength, high in the elastic modulus, high in the heat resistance, negative in the thermal expansion coefficient, electric wave-transmissive, such slender in the fineness as 11 tex, such thin in a fabric thickness as 60 µm, such super-light in the weight as 26 g/m², and such high in the weave density as 18.5 threads/in, resulting in higher surface finishing accuracy and higher adherence with the non-woven fabric.

Furthermore, since such triaxial woven fabrics can be easily folded and the triaxial woven fabric simple body is electric wave-transmissive, the physical properties are not deteriorated owing to the folding.

Still furthermore, although as the matrix resin, epoxy resin, cyanate ester resin and so on can be cited, the matrix resin is selected according to the advisability of the combination with the triaxial woven fabric and objects, and is not necessarily restricted to these.

For instance, as the resin, high temperature curable epoxy resin and cyanate ester resin (curing temperature: 180 degree centigrade, cure period: 2 hours, molding pressure: 0.6 MPa) can be used.

The resins used in the invention, when the molded body is intended to use as, for instance, a space structure, are ones that are suitable for a space environment, and when there is no problem in the adherence, there is no particular restriction.

A combination structure of the non-woven fabric and the triaxial woven fabric may be any one of that in which the non-woven fabric is pasted to the triaxial woven fabric, or that in which the triaxial woven fabrics and the non-woven fabric are laminated with the non-woven fabric interposed between the triaxial woven fabrics.

Furthermore, triaxial woven fabrics made of two or more kinds of different materials and the non-woven fabric may be laminated with the non-woven fabric interposed between the triaxial woven fabrics.

Still furthermore,the triaxial woven fabric and the non-woven fabric are laminated and thereafter may be plated.

Furthermore, the triaxial woven fabric may be a prepreg impregnated with a resin.

Still furthermore, the invention can be applied to the molded bodies such as the reflector of the parabolic antenna, the element and ground conductor of the slot antenna, the element, the ground conductor and a micro-strip line of the patch antenna, the solar battery paddle of the artificial satellite, and the bus (structure) of the artificial satellite and so on.

When the molded body is used in, for instance, an antenna for use in space, an antenna that is storable, expandable, and high in the performance can be obtained.

### Industrial Applicability

As explained above, according to the invention, the following excellent advantages can be achieved.

Since the non-woven fabric does not cause the peeling and the wrinkle, including complicated three-dimensional shapes, the structure can be freely designed.

When the electrical conducting non-woven fabric is used as the non-woven fabric, in the electrical conducting non-woven fabric, since kinds of metals and fibers, and the filament diameters and single fiber diameters can be freely selected, the electrical conducting properties, the reflectance, the porosity, the thickness and the weight can be freely controlled.

Furthermore, when a surface of the electrical conducting non-woven fabric is processed smooth, mirror surface precision can be improved, resulting in further improving the reflectance.

When the non-woven fabric having the heat conducting properties is used as the non-woven fabric, a thickness direction of the molded body in which the composite material is used such as the antenna reflector can be endowed with the heat conducting properties.

When a heat insulating non-woven fabric is used as the non-woven fabric, with a simple structure, the temperature fluctuation in the members of an artificial satellite can be alleviated.

When an electrical insulating non-woven fabric is used as the non-woven fabric, a layout of circuits and various kinds of devices on the composite material can be easily designed.

Since the triaxial woven fabric is assigned to the dimension stability and the strength properties and the non-woven fabric is assigned to the functionality such as the electrical conducting properties, the reflecting properties, and the heat conducting properties and so on, by combining the respective materials and structures, designs appropriate for applications and conditions can be realized.

The triaxial woven fabric and non-woven fabric, being pseudo-isotropic in planes, are functionally less influenced by temperature fluctuations and the stress loads. Accordingly, lighter structural materials can be obtained.

The triaxial woven fabric and non-woven fabric, having void portions therein, can stand up to the sound and vibration at the rocket launch.

According to the invention, the materials most preferable for the functional structure materials for use with the artificial satellite that combine the excellent dimensional stability, the pseudo-isotropy, the light weight, the high elastic modulus, the high heat conducting properties and the high reflecting properties can be obtained.

Furthermore, since the composite material is formed by laminating the non-woven fabric having the heat conducting properties or the heat insulating properties with the triaxial woven fabric, when the composite material is used, the heat control can be easily and as far as necessary applied to necessary portions of the device (for instance, devices for use with the artificial satellite) according to the existing manufacturing method.

In the triaxial woven fabric, the weave structure generates hexagonal through holes that interconnect front and rear surfaces thereof. Accordingly, when the structure where the electrical conducting non-woven fabrics sandwich the front and rear surfaces of the triaxial woven fabric is taken, the electrical conducting non-woven fabrics on the front and rear surfaces can be mutually electrically connected, and thereby can be functioned as an electrical conductor of one body. According to the lamination structure, the mechanical strength and the electrical characteristics can be accentuated.

The invention can be applied to, including electric circuit substrate, radiation elements, reflecting surfaces and so on of the various kinds of antennas.

According to the invention, the line antennas such as the parabolic antennas and dipole antennas and so on, or planar antennas and so on such as patch antennas and so on are excellent in the electrical properties and very light in the weight, being high in the elastic modulus to the stress, exhibit the spring-back function even under large stress to restore its original shape without undergoing the plastic deformation. Accordingly, these can be applied under various circumstances.

## Claims

1. A composite material:
wherein at least one or more triaxial woven fabrics and at least one or more non-woven fabrics are laminated, and thereby a laminated body is formed; and
the laminated body is impregnated with a resin.

2. A composite material:
wherein at least one or more triaxial woven fabrics impregnated with a resin and at least one or more non-woven fabrics impregnated with a resin are laminated.

3. A composite material:
wherein at least one or more triaxial woven fabrics impregnated with a resin and at least one or more non-woven fabrics are laminated.

4. A composite material as set forth in any one of claims 1 through 3:
wherein the triaxial woven fabrics and the non-woven fabrics are alternately laminated.

5. A composite material as set forth in any one of claims 1 through 4:
wherein the resin is in a not completely cured state.

6. A composite material as set forth in any one of claims 1 through 5:
wherein the non-woven fabric has electrical conducting properties.

7. A composite material as set forth in any one of claims 1 through 5:
wherein the non-woven fabric has electrical insulating properties.

8. A composite material as set forth in any one of claims 1 through 7:
wherein the non-woven fabric has heat conducting properties.

9. A composite material as set forth in any one of claims 1 through 7:
wherein the non-woven fabric has heat insulating properties.

10. A molded body:
wherein at least one or more triaxial woven fabrics and one or more non-woven fabrics are laminated, and thereby a laminated body is formed;
the laminated body is impregnated with a resin, and thereby a composite material is formed;
the composite material is laid-up in a mold in a state where the resin is not completely cured; and
the resin of the laid-up composite material is cured, and thereby a molded body is formed.

11. A molded body:
wherein at least one or more triaxial woven fabrics impregnated with a resin and one or more non-woven fabrics impregnated with a resin are mutually laminated in a state where the resins are not completely cured, and thereby a composite material is formed;
the composite material is laid-up in a mold; and
the resin of the laid-up composite material is cured, and thereby a molded body is formed.

12. A molded body:
wherein at least one or more triaxial woven fabrics impregnated with a resin and one or more non-woven fabrics are laminated in a state where the resin of the triaxial woven fabric is not completely cured, and thereby a composite material is formed;
the composite material is laid-up in a mold; and
the resin of the laid-up composite material is cured, and thereby a molded body is formed.

13. A molded body:
wherein at least one or more triaxial woven fabrics and one or more non-woven fabrics are laminated, and thereby a laminated body is formed;
the laminated body, while impregnating with a resin, is laid-up in a mold; and
the resin of the laid-up laminated body is cured, and thereby a molded body is formed.

14. A molded body:
wherein a non-woven fabric is laminated with a triaxial woven fabric impregnated with a resin, and thereby a laminated body is formed; and
the laminated body is laid-up followed by curing the resin, and thereby a molded body is formed.

15. A molded body as set forth in any one of claims 10 through 14:
wherein the non-woven fabric has electrical conducting properties.

16. A molded body as set forth in any one of claims 10 through 14:
wherein the non-woven fabric has electrical insulating properties.

17. A molded body as set forth in any one of claims 10 through 16:
wherein the non-woven fabric has heat conducting properties.

18. A molded body as set forth in any one of claims 10 through 16:
wherein the non-woven fabric has heat insulating properties.

19. A prepreg:
wherein triaxial woven fabrics of reinforcement fiber and electrical conducting non-woven fabrics are alternately or in an arbitrary order laminated followed by impregnating with a resin, and thereby a prepreg is formed.

20. A prepreg:
wherein prepregs formed by impregnating triaxial woven fabrics of reinforcement fiber with a resin and prepregs formed by impregnating electrical conducting non-woven fabrics with a resin are alternately or in an arbitrary order laminated, and thereby a prepreg is formed.

21. A composite material:
wherein the prepregs set forth in claim 19 or 20 are mutually laminated or the prepreg set forth in claim 19 or 20 and a prepreg having other structure are laminated, and thereby a composite material is formed.

22. A composite material:
wherein triaxial woven fabrics of reinforcement fiber and electrical conducting non-woven fabrics are alternately or in an arbitrary order laminated followed by impregnating with a resin and by curing, and thereby a composite material is formed.
